(19) **Europäisches Patentamt**

**European Patent Office**

**Office européen des brevets**

(11) **EP 1 521 098 A1**

(12) **EUROPÄISCHE PATENTANMELDUNG**

(43) Veröffentlichungstag:
06.04.2005 Patentblatt 2005/14

(51) Int Cl.⁷: **G01S 13/48**, G01S 13/44

(21) Anmeldenummer: 04019467.2

(22) Anmeldetag: **17.08.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **02.10.2003 DE 10346047**

(71) Anmelder: **EADS Deutschland GmbH**
**85521 Ottobrunn (DE)**

(72) Erfinder:
• **Gruener, Wilhelm, Dr.**
**89075 Ulm (DE)**

• **Burger, Josef**
**89291 Holzheim (DE)**
• **Patzwahl, Manfred**
**89081 Lehr (DE)**

(74) Vertreter: **Meel, Thomas**
**Patentassessor**
**c/o EADS Deutschland GmbH**
**Patentabteilung FCL6**
**88039 Friedrichshafen (DE)**

(54) **Verfahren und Vorrichtung nach dem FMCW-Radarprinzip**

(57) Die Erfindung betrifft ein Verfahren und eine Vorrichtung Verfahren Abtastung eines vorgebbaren Gebiets bezüglich Azimut- und Entfernungsrichtung nach dem FMCW-Radarprinzip. Gemäß der Erfindung wird zur Auflösung eines Empfangssignals in Azimutrichtung eine erste Fouriertransformation des Empfangssignals durchgeführt und zur Auflösung in Entfernungsrichtung wird für jede Azimutrichtung eine weitere Fouriertransformation durchgeführt.

Fig. 3

EP 1 521 098 A1

**Beschreibung**

Die Erfindung betrifft ein Verfahren und eine Vorrichtung nach dem FMCW-Radarprinzip gemäß den Oberbegriffen der Patentansprüche 1 und 6.

Aus dem Stand der Technik sind FMCW-Radarverfahren bekannt, bei welchen die Antennenkeule über den aufzulösenden Azimutbereich geschwenkt wird. Diese Verfahren werden auch als Frequency-Scan Verfahren bezeichnet. Ein Nachteil dieses Verfahrens ist die hohe Abtastrate der in den FMCW-Radargeräten verwendeten A-nalog-/Digital-Wandlern. Weitere Nachteile sind die Kopplung der Entfernungsauflösung mit der Azimutauflösung, die hohe benötigte Bandbreite sowie die hohen Verluste der Frequency-Scan Antenne.

Es ist Aufgabe der Erfindung, ein Verfahren nach dem FMCW-Radarprinzip anzugeben, mit dem die Abtastung eines vorgebbaren Gebiets mit einer hohen Bildwiederholungsrate möglich ist. Eine weitere Aufgabe besteht in der Schaffung eines Radarsystems mit welchem dieses Verfahren durchgeführt werden kann.

Diese Aufgabe wird mit dem Verfahren gemäß Patentanspruch 1 und der Vorrichtung gemäß Patentanspruch 8 gelöst. Vorteilhafte Ausgestaltung der Erfindung sind Gegenstand von Unteransprüchen.

Gemäß der Erfindung wird zur Auflösung eines Empfangssignals in Azimutrichtung eine erste Fouriertransformation des Empfangssignals durchgeführt und zur Auflösung in Entfernungsrichtung wird für jede Azimutrichtung eine weitere Fouriertransformation durchgeführt.

Die Erfindung wird im folgenden anhand von Zeichnungen näher erläutert. Es zeigen:

Fig. 1   den schematischen Frequenzverlauf bei einem FMCW-Radarverfahren,
Fig. 2   eine Prinzipdarstellung des erfindungsgemäßen FMCW-Radarverfahrens,
Fig. 3   ein beispielhaftes Blockschaltbild eines erfindungsgemäßen FMCW-Radarsystems,
Fig. 4   ein beispielhaftes Blockschaltbild der Signalverarbeitungseinheit.

Im Folgenden wird kurz auf die Grundlagen der Entfernungsbestimmung und Azimutbestimmung nach dem FMCW-Radarprinzip eingegangen.

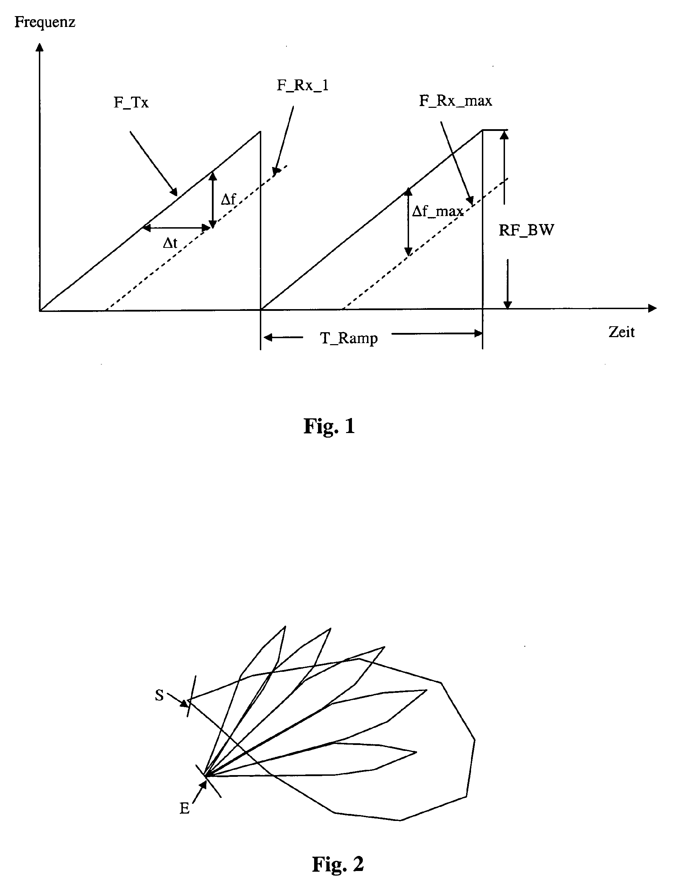

Bei einem FMCW-Radar wird üblicherweise ein linear frequenzmoduliertes Sendesignal verwendet. Fig. 1 zeigt eine beispielhafte Darstellung des Verlaufs eines frequenzmodulierten Sende- und Empfangssignals. Der Frequenzverlauf des Sendesigals ist mit dem Bezugszeichen F_Tx und der Frequenzverlauf des Empfangssignals ist mit den Bezugszeichen F_Rx_1 und F_Rx_max bezeichnet.

Die Entfernungsbestimmung bei einem FMCW-Radar erfolgt über eine Frequenzanalyse der Frequenzdifferenz $\Delta f$ zwischen dem Sendesignal und dem Empfangssignal. Die Steigung der Rampe wird im Wesentlichen bestimmt durch folgende Anwendungsparameter:

- durch die Entfernungsauflösung bzw. durch die Bandbreite RF_BW,
- durch die Bildwiederholungsrate bzw. durch die Anstiegszeit T_Ramp der Frequenzmodulation.

Somit ergibt sich die Steigung SLOPE der Rampe gemäß:

$$SLOPE = \frac{RF\_BW}{T\_RAMP} \; .$$

Die geforderte Bandbreite RF_BW für eine gewünschte Entfernungsauflösung berechnet sich gemäß:

$$RF\_BW = \frac{c}{2\Delta R} \; .$$

Danach beträgt für eine Entfernungsauflösung von z.B. $\Delta R = 1$ m die Bandbreite RF_BW =150 MHz.

Die Anstiegszeit T_Ramp ist gleichzusetzen mit der Verweildauer des Sendestrahls auf dem Ziel. Für eine Verweildauer von z.B. T_Ramp = 1 ms ergibt sich somit für die Steigung SLOPE der Rampe: SLOPE = 150 kHz/µs.

Beim FMCW-Radarverfahren ist im Gegensatz zum Pulsradarverfahren die maximale dem Analog-/Digital-Wandler zugeführte Frequenz nicht die Bandbreite, sondern die maximale Frequenzdifferenz $\Delta f\_max$ zwischen Sende- und Empfangssignal (Fig. 1).

Die maximale Frequenzdifferenz $\Delta f\_max$ wird aus der maximal aufzulösenden Entfernung und der Steigung der Rampe wie folgt bestimmt:

$$SLOPE = \frac{RF\_BW}{T\_RAMP} = \frac{\Delta f}{\Delta t} = \frac{\Delta f\_max}{\Delta t\_max}$$

$$c = \frac{2R\_max}{\Delta t} \Rightarrow \Delta t = \frac{2R\_max}{c}$$

Für eine maximale Entfernung R_max von z.B. 5 km ergibt sich somit für Δt_max = 33,3 μs. Die maximale Frequenzdifferenz Δf_max berechnet sich gemäß Δf_max = Δt_max * SLOPE = 33,3 μs * 150 kHz/μs = 5 MHz.

Es ist somit möglich, mittels des FMCW-Radarverfahrens die Sampling-Raten der Analog-/Digital-Wandlern wesentlich zu reduzieren.

Das abzutastende Gebiet wird bezüglich des Azimuts üblicherweise mittels eines einzelnen über einen vorgebbaren Winkelbereich schwenkenden Sende- und Empfangsstrahls aufgelöst. Die Abtastzeit, welche benötigt wird um den vorgegebenen Winkelbereich abzutasten ergibt sich gemäß:

$$t\_s = \frac{\alpha}{\varphi} * t\_dwell$$

mit

| | |
|---|---|
| t_s | Abtastzeit |
| α | Winkelbereich |
| φ | Strahlbreite |
| t_dwell | Verweildauer des Strahls in einem Winkelsegment |

Gemäß der Erfindung wird mittels einer ersten Fouriertransformation ein fächerförmige Strahlungsdiagramm erzeugt, welches eine Vielzahl von einzelnen Strahlen umfasst. Die Richtungen der Strahlen entsprechen dabei den einzelnen Azimutrichtungen. Insbesondere ist jedes Empfangsmodul des Antennenarrays der Empfangsantenne Ausgangspunkt für alle Azimutrichtungen.

Die Fouriertransformation ist hierbei insbesondere eine N-Punkt Fouriertransformation, wobei N die Zahl der Empfangsmodule ist.

In Fig. 2 ist beispielhaft eine Prinzipdarstellung des erfindungsgemäßen FMCW-Radarverfahrens gezeigt. Die Sendeantenne und die Empfangsantenne sind räumlich voneinander getrennt. Die Sendeantenne S emittiert ein Sendesignal mit einer breiten Strahlungscharakteristik. Die Empfangsantenne E weist über einen vorgegebenen Winkelbereich α eine fächerförmige Strahlungscharakteristik auf, wobei einzelne schmale Strahlen dieser Charakteristik entlang vorgebbarer Azimutrichtungen ausgerichtet sind.

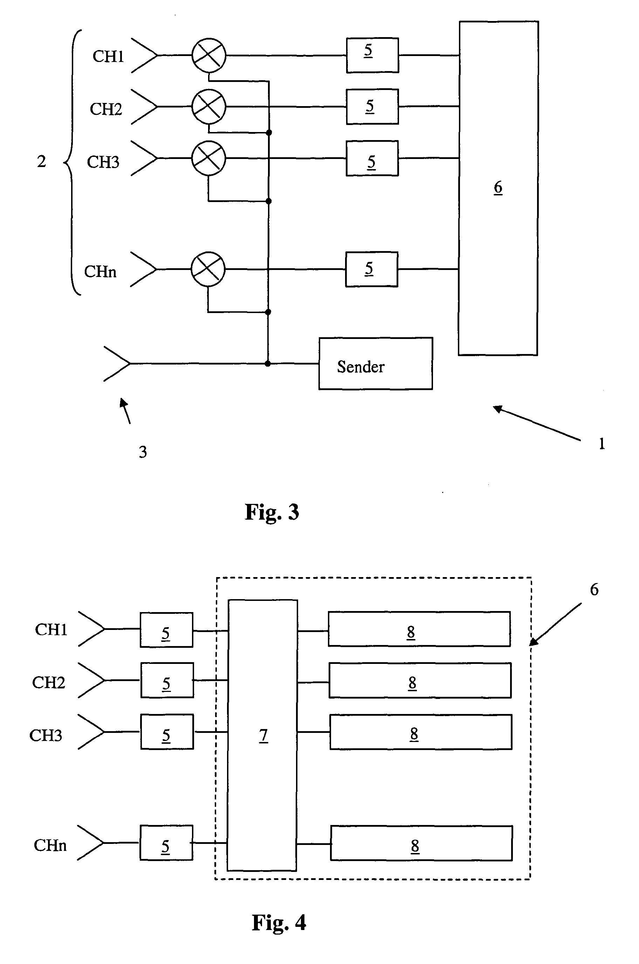

Fig. 3 zeigt ein beispielhaftes Blockschaltbild eines erfindungsgemäßen FMCW-Radarsystems. Das Radarsystem 1 umfasst eine Sendeantenne 2 und ein Empfangsantennenarray 3 mit einer Vielzahl von Empfangsmodulen CH1...CHn. Die Empfangsmodule CH1...CHn sind mit den Eingängen von Mischern 4 zum Vergleich des Empfangssignals mit dem Sendesignal verbunden. Die Ausgänge der Mischer 4 sind jeweils mit Analog-/Digital-Wandlern 5 verbunden. Die Analog-/Digital-Wandler 5 sind an eine mehrkanalige Signalverarbeitungseinheit 6 angeschlossen. In Fig. 4 ist ein beispielhaftes Blockschaltbild der Signalverarbeitungseinheit 6 dargestellt. In der Signalverarbeitungseinheit 6 wird zunächst das von den Analog-/Digital-Wandern 5 gelieferte digitale Signal in einer ersten Fouriertransformation 7 bearbeitet. Dadurch wird eine Strahlformung erreicht, wodurch die bereits oben beschriebene fingerförmige Strahlungscharakteistik des Antennenarrays erzeugt wird.

Anschließend wird für jeden Kanal CH1...CHn eine weitere Fouriertransformation 8 durchgeführt, wobei für jeden Kanal die Entfernung aufgelöst wird.

Das erfindungsgemäße FMCW-Radarverfahren und das erfindungsgemäße FMCW-Radarsystem kann z.B. als allwetterfähige Anflughilfe, als Fahrzeugradar oder als Überwachungsradar für kleinere Gebiete z.B. Flughäfen genutzt werden. Im folgenden soll beispielhaft auf die technischen Details eines erfindungsgemäßen FMCW-Radarsystems für eine allwetterfähige Anflughilfe eingegangen werden.

Das System arbeitet mit Millimeterwellen bei 35 GHz. Die abzutastende Entfernung beträgt etwa 4 km mit einer Entfernungsauflösung von 2,0 m. Die Empfangsantenne mit einer Apertur von 600 mm auf 100 mm umfasst 128 Empfangsmodule mit einem Abstand von 0,6 λ. Somit ist es möglich ein Gebiet (field of view = FOV) von +/- 30° abzutasten. Mit dieser Anordnung ist eine Strahlbreite in Azmiut von 1 ° und eine theoretische Antennenverstärkung von 36dB möglich.

Die Sendeapertur beleuchtet das gesamte Gebiet FOV von +/- 30°. Dies erfordert eine Sendeantenne mit einer Sendeapertur von 35 mm auf 100 mm mit einem Antennengewinn von 18 dB.

Nach der digitalen Strahlformung werden entsprechend der 128 Empfangsmodule 128 Empfangsstrahlen mit einem Winkelabstand von 0,7 ° in Antennenblickrichtung erzeugt, von denen ca. 80 Antennenblickrichtungen weiterverarbeitet werden.

**Patentansprüche**

1. Verfahren zur Abtastung eines vorgebbaren Gebiets bezüglich Azimut- und Entfernungsrichtung nach dem FMCW-Radarprinzip, **dadurch gekennzeichnet, dass** zur Auflösung eines Empfangssignals in Azimutrichtung eine erste Fouriertransformation des Empfangssignals durchgeführt wird und dass zur Auflösung in Entfernungsrichtung für jede Azimutrichtung eine weitere Fouriertransformation durchgeführt wird.

2. Verfahren nach Anspruch 1, **dadurch gekennzeichnet, dass** das Empfangssignal von einem Antennenarray (2) umfassend eine Vielzahl von Empfangsmodulen (CH1,..,CHn) an eine mehrkanalige Signalverarbeitungseinheit (6) geleitet wird.

3. Verfahren nach Anspruch 2, **dadurch gekennzeichnet, dass** zwischen den Empfangsmodulen (CH1,..,CHn) und der Signalverarbeitungseinheit (6) jeweils Analog-/Digital-Wandler (5) geschaltet sind.

4. Verfahren nach Anspruch 3, **dadurch gekennzeichnet, dass** die Zahl der Kanäle der Signalverarbeitungseinheit (6) der Zahl der Empfangsmodule (CH1,..,CHn) entspricht.

5. Verfahren nach einem der Ansprüche 2-4, **dadurch gekennzeichnet, dass** die Berechnungen der ersten und zweiten Fouriertransformation in der Signalverarbeitungseinheit (6) durchgeführt werden.

6. Verfahren nach einem vorangehenden Ansprüche, **dadurch gekennzeichnet, dass** bei der Berechnung der ersten Fouriertransformation ein mehrstrahliges Strahlungsdiagramm erzeugt wird, wobei jedes Empfangsmodul (CH1,..,CHn) Ausgangspunkt aller Azimutrichtungen ist.

7. Verfahren nach Anspruch 6, **dadurch gekennzeichnet, dass** bei der Berechnung des Strahlungsdiagramms eine vorgebbare Anzahl der Empfangsmodule (CH1,...,CHn) verwendet werden.

8. Verfahren nach einem der vorangehenden Ansprüche, **dadurch gekennzeichnet, dass** bei der Berechnung der zweiten Fouriertransformation die maximale Frequenzdifferenz $\Delta$f zwischen Sende- und Empfangssignal bestimmt wird.

9. FMCW-Radarsystem zur Durchführung eines Verfahrens nach einem der vorangehenden Ansprüche, **dadurch gekennzeichnet, dass** das Radarsystem (1) eine Sendeantenne (3) und ein Antennenarray (2) mit einer Vielzahl von Empfangsmodulen (CH1,..,CHn) umfasst.

10. Radarsystem nach Anspruch 9, **dadurch gekennzeichnet, dass** jedes Empfangsmodul (CH1,..,CHn) mit einem Eingang eines Analog-/Digital-Wandlers (5) verbunden ist.

11. Radarsystem nach Anspruch 10, **dadurch gekennzeichnet, dass** der Ausgang jedes Analog-/Digital-Wandlers (5) mit der Signalverarbeitungseinheit (6) verbunden ist.

12. Radarsystem nach einem der Ansprüche 9-11, **dadurch gekennzeichnet, dass** der Abstand der Empfangsmodule (CH1,..,CHn) mindestens der halben Wellenlänge entspricht.

**Fig. 1**

**Fig. 2**

**Fig. 3**

**Fig. 4**

**Europäisches Patentamt**

## EUROPÄISCHER RECHERCHENBERICHT

Nummer der Anmeldung

EP 04 01 9467

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 37 40 232 A (THOMSON CSF) 5. Oktober 1995 (1995-10-05) * Spalte 2, Zeile 32 - Spalte 5, Zeile 25; Abbildungen 1-7 * ----- | 1-12 | G01S13/48 G01S13/44 |
| Y | DE 100 27 345 A (DENSO CORP) 8. Februar 2001 (2001-02-08) * Spalte 13, Zeile 29 - Spalte 14, Zeile 33; Abbildungen 5,6 * ----- | 1-12 | |
| Y | EP 0 805 360 A (HONDA MOTOR CO LTD) 5. November 1997 (1997-11-05) * Spalte 6, Zeile 31 - Spalte 7, Zeile 14; Abbildungen 1-4 * ----- | 1-12 | |
| Y | EP 0 684 486 A (HONDA MOTOR CO LTD) 29. November 1995 (1995-11-29) * Seite 7, Zeile 37 - Seite 8, Zeile 19; Abbildungen 1-3 * ----- | 1-12 | |
| Y | EP 0 913 705 A (TOYOTA MOTOR CO LTD) 6. Mai 1999 (1999-05-06) * das ganze Dokument * ----- | 1,9 | RECHERCHIERTE SACHGEBIETE (Int.Cl.7) G01S |

Der vorliegende Recherchenbericht wurde für alle Patentansprüche erstellt

| Recherchenort | Abschlußdatum der Recherche | Prüfer |
|---|---|---|
| München | 10. Dezember 2004 | Fanjul Caudevilla, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 01 9467

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 3740232 | A | 05-10-1995 | FR | 2714735 A1 | 07-07-1995 |
| | | | DE | 3740232 A1 | 05-10-1995 |
| | | | GB | 2290876 A ,B | 10-01-1996 |
| DE 10027345 | A | 08-02-2001 | JP | 2001051050 A | 23-02-2001 |
| | | | DE | 10027345 A1 | 08-02-2001 |
| | | | US | 6337656 B1 | 08-01-2002 |
| EP 0805360 | A | 05-11-1997 | JP | 9297173 A | 18-11-1997 |
| | | | JP | 9297174 A | 18-11-1997 |
| | | | EP | 1324068 A2 | 02-07-2003 |
| | | | EP | 0805360 A2 | 05-11-1997 |
| | | | US | 6137434 A | 24-10-2000 |
| | | | US | 5933109 A | 03-08-1999 |
| EP 0684486 | A | 29-11-1995 | JP | 3256374 B2 | 12-02-2002 |
| | | | JP | 7318635 A | 08-12-1995 |
| | | | DE | 69531380 D1 | 04-09-2003 |
| | | | DE | 69531380 T2 | 04-03-2004 |
| | | | EP | 0684486 A2 | 29-11-1995 |
| | | | US | 5579010 A | 26-11-1996 |
| EP 0913705 | A | 06-05-1999 | JP | 3525425 B2 | 10-05-2004 |
| | | | JP | 11133142 A | 21-05-1999 |
| | | | DE | 69809372 D1 | 19-12-2002 |
| | | | DE | 69809372 T2 | 28-08-2003 |
| | | | EP | 0913705 A2 | 06-05-1999 |
| | | | US | 6121917 A | 19-09-2000 |

EPO FORM P0461

Für nähere Einzelheiten zu diesem Anhang : siehe Amtsblatt des Europäischen Patentamts, Nr.12/82